# EUROPEAN PATENT SPECIFICATION

(11) **EP 3 472 116 B1**
(45) Date of publication and mention of the grant of the patent: **25.10.2023**
(21) Application number: 17734571.7
(22) Date of filing: 15.06.2017
(51) Int. Cl.: C03C 27/10, G02B 7/02, C09J 1/00

(54) **POLYMER-FREE COMPLIANT OPTICAL MEMBER SUPPORT**
POLYMERFREIER NACHGIEBIGER TRÄGER FÜR OPTISCHES ELEMENT
SUPPORT D'ÉLÉMENT OPTIQUE SOUPLE SANS POLYMÈRE

(30) Priority: 17.06.2016 US 201662351426 P
(43) Date of publication of application: 24.04.2019
(73) Proprietor: Corning Incorporated, Corning, New York 14831 (US)
(72) Inventor: MCMASTER, Brian Monroe, Pittsford, New York 14534 (US)
(74) Representative: Sturm, Christoph
(86) International application number: PCT/US2017/037597
(87) International publication number: WO 2017/218728

(56) References cited:
- EP-A1- 1 026 532
- EP-A2- 0 230 277
- EP-A2- 1 081 521
- JP-A- S5 887 504
- US-A1- 2002 001 323

## Description

This application claims the benefit of priority under 35 U.S.C. § 119 of U.S. Provisional Application Serial No. 62/351,426 filed on June 17, 2016.

### FIELD OF THE DISCLOSURE

This disclosure pertains to an assembly for mounting an optical element in an optical system.

### BACKGROUND OF THE DISCLOSURE

Industry practice for mounting optical elements, such as precision lenses for lithographic equipment, involves the use of compliant material to fixate a lens to a mount. The compliant material reduces induced deformations to the optical element when the mount is subjected to mechanical stresses or thermal strain.

Typically, the compliant material is a plastic comprised of an organic polymer that will bond to the optical element. Further, whether the compliant material comprises an organic polymer or an inorganic material, such as metal, the compliant material linking the optical member to the mount is typically secured to the optical member using an organic adhesive, such as an epoxy resin or a cyanoacrylate resin.

In certain optical systems, organic polymers can create contamination problems that degrade performance of the optical elements.

EP 1 026 532 A1 discloses an assembly for mounting an optical element in an optical system showing the features of the preamble of claim 1. EP 1 081 521 A2, JP S58 87504 A, EP 0 230 277 A2 and US 2002/001323 A1 disclose additional prior art.

### SUMMARY OF THE DISCLOSURE

The invention provides an assembly for mounting an optical element in an optical system according to claim 1.

### BRIEF DESCRIPTION OF THE DRAWINGS

Figure 1 is a sectioned perspective view of an assembly for mounting an optical element in accordance with this disclosure.
Figure 2 is a sectioned perspective view of an alternative assembly for mounting an optical element in accordance with this disclosure.
Figure 3 is a schematic illustrating details of an adhesive attachment of a lens to a flexible metal member in accordance with this disclosure.
Figure 4 is a schematic illustrating details of an alternative adhesive attachment of a lens to a flexible metal member in accordance with this disclosure.
Figure 5 is a perspective view of a further alternative assembly for mounting an optical element in accordance with this disclosure.

### DETAILED DESCRIPTION

The disclosed optical element assembly employs an inorganic adhesive to affix an optical element to flexible metal members that act like springs to decouple deformations between the lens and the lens mount, while also facilitating precise alignment and avoiding contamination problems that can occur when organic materials are employed.

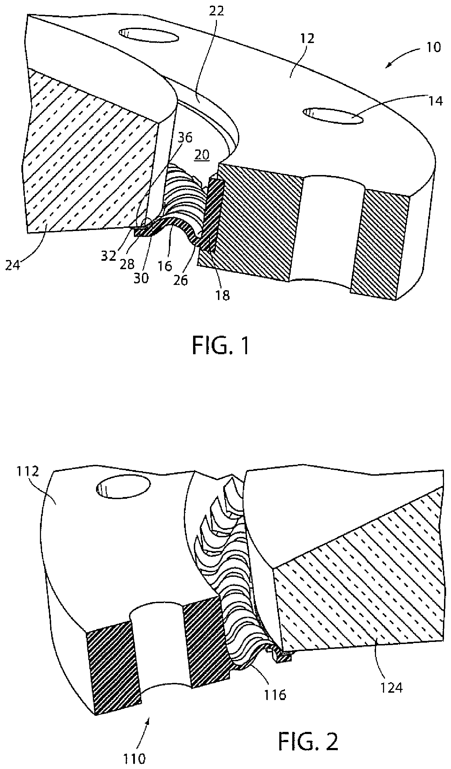

Figure 1 shows an optical element assembly 10. Assembly 10 includes a mount 12 having a ring-shape and defining attachment features or holes 14 for affixing the mount to an optical system, such as a housing for a combination of optical elements used in a lithography apparatus, using screws or other fasteners. Alternative attachment features may be used to facilitate a rigid attachment of the mount to an optical system using clamps or other securement devices. In Figure 1, flexible metal members 16 are an integral portion of a retainer 18 having a ring-shaped wall portion 20 that abuts and is secured to an inner circumferential wall 22 of ring-shaped mount 12. Flexible members 16 extend radially inwardly and substantially perpendicularly from wall 20 toward an optical axis of an optical element 24. The "optical axis" refers to a line that extends perpendicularly through a center of a plane of main extension of the optical element. The flexible members 16 are spaced apart and have a thickness suitable to allow flexure of the flexible members to effectively isolate and decouple the optical element 24 from mechanical stresses and thermal strains. Flexible members 16 have an inverted U-shape profile to impart resilience, springiness and/or rebound properties.

Integral wall 20 and flexible members 16 of retainer 18 are formed of a metal that can be secured to wall 22 of mount 12 with fasteners (e.g., screws), a frictional interference fit, and/or with an inorganic (or organic) adhesive. A first end 26 of each flexible member 16 extends integrally from wall 20, and an opposite free end 28 defines an upper bearing surface 30 for supporting optical element 24.

An inorganic adhesive 32 is disposed on the bearing surface 30 between flexible members 16 and corresponding surfaces of optical element 24 to secure optical element 24 on retainer 18, such that optical element 24 is held by mount 12, yet decoupled from mechanical stresses and thermal strains by the flexible members 16 of retainer 18.

As used herein, an "inorganic adhesive" is a substance capable of holding materials together by surface attachment. Additionally, as used herein, an "inorganic adhesive composition" or "inorganic adhesive composition precursor" is an adhesive or precursor to an adhesive, respectively, which contains inorganic materials, usually a majority by weight of inorganic materials, such as metal oxides, other inorganic additives, or both. Inorganic adhesive compositions, as described herein, may contain some amount of organic material, such as organic adhesion promoters. However, in one embodiment, the inorganic adhesive composition may generally comprise a ceramic material. In some embodiments, the inorganic adhesive composition may comprise one or more metal oxides such as, but not limited to, oxides of zinc, tin, aluminum, indium, iron, tungsten, titanium, zirconium, silicon, silicon nitride, boron, boron nitride, copper, silver, yttrium, rare earth ions, or combinations thereof. The inorganic adhesive may comprise one or more metal oxides doped with one or more other metal oxides, such as yttria-stabilized zirconia, sometimes referred to herein as "YSZ."

The optical element may be secured to the flexible members 16 by a method generally comprising depositing an inorganic adhesive composition precursor onto the optical element 24 and/or onto the bearing surface 30 and then bringing the optical element 24 and bearing surface 30 into contact with each other and solidifying the inorganic adhesive composition precursor to form an inorganic adhesive composition.

The inorganic adhesive composition precursor may comprise a metallic salt or other metal ion containing compound in a solvent. The metallic salt and/or other metal ion containing compound may comprise ions of zinc, tin, aluminum, indium, iron, tungsten, titanium, zirconium, silicon, silicon nitride, boron, boron nitride, copper, silver, yttrium, rare earth ions, or combinations thereof. In one embodiment, the metallic salt and/or or other metal ion containing compound may comprise ions of zirconium, yttrium, or both.

In some embodiments, the solvent may be a polar aprotic solvent. The polar aprotic solvents described herein have ion solvating properties that facilitate the process of making a stable inorganic adhesive composition precursor. The inorganic adhesive composition precursor may be a sol-gel solution. The sol-gel described herein may be different from traditional sol-gel chemistry in several important ways. For example, the proposed material reaction to form the sol-gel solution may not use alcohol solvents or conventional water/acid catalysis. Instead, the reaction may utilize metal salt concentrations in polar aprotic solvents (e.g. DMF, NMP) at relatively high concentration (0.5-2.0 M).

Polar aprotic solvents such as, for example, dimethylformamide (DMF) and n-methyl pyrrolidone (NMP), can be used to produce stable precursor solutions with metal salts and/or other metal ion containing compounds. Polar aprotic solvents may be described as solvents that share ion dissolving power with protic solvents but lack an acidic hydrogen. These solvents generally have intermediate dielectric constants and polarity. Aprotic solvents do not commonly display hydrogen bonding or have an acidic hydrogen. They are commonly able to stabilize ions. Examples of suitable polar aprotic solvents include dichloromethane (DCM), tetrahydrofuran (THF), ethyl acetate, acetone, dimethylformamide (DMF), acetonitrile, and dimethylsulfozide (DMSO).

Various metal oxides can be included in the inorganic adhesive composition based on the components of the inorganic adhesive composition precursor. For example, an inorganic adhesive composition comprising YSZ can be prepared by utilizing an inorganic adhesive composition precursor. Such an inorganic adhesive composition precursor may be prepared by mixing a first zirconia containing metal salt solution and a second yttria containing salt solution. The first solution may include zirconium oxychloride octohydrate (Zr(OCl₂).8H₂O, >99% from Sigma-Aldrich) dissolved in N,N-dimethylformamide (DMF). The second solution may include Yttrium Chloride (YCl₃ from Sigma Aldrich) dissolved in N,N-dimethylformamide (DMF). The first and second solutions may be prepared with molar concentrations having stoichiometry to achieve a ratio between the atom % values of Zirconia and Yttrium. For example, samples may contain 1%, 2%, 4% and 8% atom content of Yttrium in Zirconia. An ultrasonic bath may be used to facilitate mixing. The inorganic adhesive composition precursor may be clear and of significant viscosity.

An advantage of the inorganic adhesive compositions disclosed herein is the stability of the inorganic adhesive composition precursor. The inorganic adhesive composition precursor can be stored in ambient conditions for at least a month without significant degradation of the sol-gel chemical structure of the metal ions or the solvent.

The inorganic adhesive composition precursor is converted into the inorganic adhesive composition through a solidification step. The solidification may comprise exposing the inorganic adhesive composition precursor to a temperature in a range of from about 200°C to about 1200°C. In other embodiments, the solidification may comprise exposing the inorganic adhesive composition precursor to a temperature in a range of from about 250°C to about 1100°C, from about 300°C to about 800°C, or from about 300°C to about 600°C. During the solidification, the solvent may be liberated from the inorganic adhesive composition precursor and at least some of the components of inorganic adhesive composition precursor may be sintered.

The heating may be by oven, hot plate, or any other suitable heating mechanism. In some embodiments, other heating mechanisms such as microwave and inductive heating may be used. Time and temperature of such heating processes may vary depending upon the heating mechanism utilized in the solidification step. In one embodiment, the inorganic adhesive composition precursor may be heated with a laser. For example, a laser having a 40 W power rating at 810 nm focused on a spot size of approximately 2 mm may be used. However, the use of various laser powers, wavelengths, and surface areas is contemplated herein. The heating step may take less than about 3 minutes, less than about 2 minutes, less than about 1 minute, less than about 45 seconds, less than about 30 seconds, less than about 20 seconds, less than about 15 seconds, less than about 10 seconds, or even less than about 5 seconds. However, the time may be dependent upon the power of the laser and the contacting surface of the laser. The adhesive composition may then be allowed to cool by any process, such as by accelerated cooling or through cooling in an ambient atmosphere at or near room temperature.

Another embodiment 110 of the disclosed assembly for mounting an optical element is shown in Figure 2. In this embodiment, flexible metal members 116 are integrally formed of the material forming mount 112. In other words, flexible metal members 116 and mount 112 are portions of a monolithic fixture. The structure of embodiment 110 is otherwise similar to, or substantially the same as embodiment 10. This embodiment 110 eliminates the task of affixing a retainer 18 to mount 12.

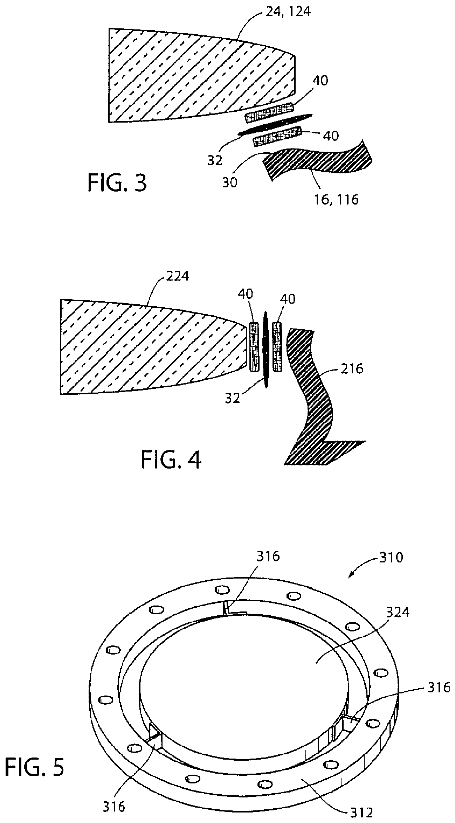

According to claim 1, in any of the disclosed embodiments, adhesion between the optical element 24, 124 and the flexible metal members 16, 116 is enhanced by applying an adhesion promoting coating 40 to the binding surfaces of the optical element, the binding surface (bearing surface) of the flexible metal members, or both the binding surfaces of the optical element and the flexible metal members, as illustrated in Figure 3. The adhesion promoting coating may include, without limitation, titanates (such as Tyzor 131 commercially available from DuPont), zirconates, (such as Tyzor 217 commercially available from DuPont), silanes (such as SIB 1824 and SIB 1821 commercially available from Gelest).

Figure 4 shows an alternative mounting of an optical element 224 to a flexible metal member 216 along edge surfaces of optical member 224. These geometries are illustrative, it being apparent that a plurality of alternative geometries may be employed.

Figure 5 shows another embodiment 310 in which flexible members 316 extend radially inwardly toward the optical axis of optical element 324 and include a lateral portion or free end that extends circumferentially and defines a bearing surface for adhesively joining the lens to the ring-shaped mount 312 while isolating the optical member from mechanical stresses and thermal strains. The flexures in Figure 5 are articulated so that the optical element may be secured around the side perimeter of the optical element. Regardless of flexure geometry, the same optional coating(s) and binding agent can used as previously described to secure and ensure that no gripping stress is transferred to the optical element.

Unless otherwise indicated it is envisioned that any feature of any embodiment can, unless incompatible, be used in any other embodiment. Optical elements that may be employed include lens, mirrors and prisms.

## Claims

1. An assembly (10, 110, 310) for mounting an optical element (24, 124, 224, 324) in an optical system, comprising:
a mount (12, 112, 312) configured for rigid attachment to the optical system;
a plurality of flexible metal members (16, 116, 216, 316), each flexible metal member (16, 116, 216, 316) having a first end (28) affixed to or integrally extending from the mount (12,112, 312), and a free end (28) defining a bearing surface (30) for supporting an optical element (24, 124, 224, 324); and
an optical element (24, 124, 224, 324) joined to the bearing surfaces (30) of the plurality of flexible members (16, 116, 216, 316) with an adhesive (32)
**characterized by** the adhesive (32) being an inorganic adhesive, wherein adhesion between the optical element (24, 124, 224, 324) and the flexible metal members (16, 116, 216, 316) is enhanced by providing an adhesion promoting coating (40) on a bonding surface of the optical element (24, 124, 224, 324) or wherein adhesion between the optical element (24, 124, 224, 324) and the flexible metal member (16, 116, 216, 316) is enhanced by providing an adhesion promoting coating (40) on the bearing surface (30) of the flexible metal member (16, 116, 216, 316).

2. The assembly (10, 110, 310) of Claim 1, wherein the mount (12, 112, 312) has a ring-shape.

3. The assembly (10, 110, 310) of Claim 1 or 2, wherein the flexible metal members (16, 116, 216, 316) are integrally formed with the mount (12, 112, 312) from a monolithic metal body.

4. The assembly (10, 110, 310) of any of Claims 1-3, wherein the mount (12, 112, 312) includes attachment features for affixing the mount (12, 112, 312) to an optical system.

5. The assembly (10, 110, 310) of any of Claims 1-4, wherein the mount (12, 112, 312) includes holes for affixing the mount (12, 112, 312) to an optical system.

6. The assembly (10, 110, 310) of any of Claims 1-5, wherein the flexible metal members (16, 116, 216, 316) are integral portions of a retainer having a ring-shaped wall abutting and secured to an inner circumferential wall of the mount (12, 112, 312).

7. The assembly (10, 110, 310) of any of Claims 1-6, wherein the flexible metal members (16, 116, 216, 316) have an inverted U-shape profile.

8. The assembly (10, 110, 310) of any of Claims 1-7, wherein adhesion between the optical element (24, 124, 224, 324) and the flexible metal member (16, 116, 216, 316) is enhanced by providing an adhesion promoting coating (40) on both the bonding surfaces of the optical element (24, 124, 224, 324) and the bearing surfaces (30) of the flexible metal members (16, 116, 216, 316).

9. The assembly (10, 110, 310) of any of Claims 1-8, wherein the adhesion promoting coating (40) is comprised of titanates, zirconates or silanes.

10. The assembly (10, 110, 310) of any of Claims 1-9, wherein the inorganic adhesive (32) comprises metal oxides.

11. The assembly (10, 110, 310) of Claim 10, wherein the metal oxides are selected from oxides of zinc, tin, aluminum, indium, iron, tungsten, titanium, silicon, silicon nitride, boron, boron nitride, copper, silver, yttrium, rare earth ions and combinations thereof.

## Patentansprüche

1. Anordnung (10, 110, 310) zum Montieren eines optischen Elements (24, 124, 224, 324) in einem optischen System, aufweisend:
eine Halterung (12, 112, 312), gestaltet zur starren Befestigung an das optische System;
eine Vielzahl von flexiblen Metallelementen (16, 116, 216, 316), wobei jedes flexible Metallelement (16, 116, 216, 316) ein erstes Ende (28), das an der Halterung (12, 112, 312) befestigt ist oder integral davon vorragt, und ein freies Ende (28), das eine tragende Oberfläche (30) zum Tragen eines optischen Elements (24, 124, 224, 324) definiert, aufweist; und
ein optisches Element (24, 124, 224, 324), das mit einem Klebstoff (32) mit den tragenden Oberflächen (30) der Vielzahl von flexiblen Elementen (16, 116, 216, 316) verbunden ist,
**dadurch gekennzeichnet, dass** der Klebstoff (32) ein anorganischer Klebstoff ist, wobei Haftung zwischen dem optischen Element (24, 124, 224, 324) und den flexiblen Metallelementen (16, 116, 216, 316) durch Bereitstellung einer haftfördernden Beschichtung (40) auf einer Bindeoberfläche des optischen Elements (24, 124, 224, 324) verstärkt ist, oder wobei Haftung zwischen dem optischen Element (24, 124, 224, 324) und dem flexiblen Metallelement (16, 116, 216, 316) durch Bereitstellung einer haftfördernden Beschichtung (40) auf der tragenden Oberfläche (30) des flexiblen Metallelements (16, 116, 216, 316) verstärkt ist.

2. Anordnung (10, 110, 310) gemäß Anspruch 1, wobei die Halterung (12, 112, 312) eine Ringform aufweist.

3. Anordnung (10, 110, 310) gemäß Anspruch 1 oder 2, wobei die flexiblen Metallelemente (16, 116, 216, 316) integral mit der Halterung (12, 112, 312) aus einem monolithischen Metallkörper gebildet sind.

4. Anordnung (10, 110, 310) gemäß einem der Ansprüche 1-3, wobei die Halterung (12, 112, 312) Befestigungselemente zum Befestigen der Halterung (12, 112, 312) an einem optischen System enthält.

5. Anordnung (10, 110, 310) gemäß einem der Ansprüche 1-4, wobei die Halterung (12, 112, 312) Löcher zum Befestigen der Halterung (12, 112, 312) an einem optischen System enthält.

6. Anordnung (10, 110, 310) gemäß einem der Ansprüche 1-5, wobei die flexiblen Metallelemente (16, 116, 216, 316) integrale Teile einer Aufnahme sind, die eine ringförmige Wand aufweist, die an eine innere Umfangswand der Halterung (12, 112, 312) anstößt und daran befestigt ist.

7. Anordnung (10, 110, 310) gemäß einem der Ansprüche 1-6, wobei die flexiblen Metallelemente (16, 116, 216, 316) ein umgekehrt U-förmiges Profil aufweisen.

8. Anordnung (10, 110, 310) gemäß einem der Ansprüche 1-7, wobei Haftung zwischen dem optischen Element (24, 124, 224, 324) und dem flexiblen Metallelement (16, 116, 216, 316) durch Bereitstellung einer haftfördernden Beschichtung (40) sowohl auf den Bindeoberflächen des optischen Elements (24, 124, 224, 324) als auch den tragenden Oberflächen (30) der flexiblen Metallelemente (16, 116, 216, 316) verstärkt ist.

9. Anordnung (10, 110, 310) gemäß einem der Ansprüche 1-8, wobei die haftfördernde Beschichtung (40) aus Titanaten, Zirkonaten oder Silanen besteht.

10. Anordnung (10, 110, 310) gemäß einem der Ansprüche 1-9, wobei der anorganische Klebstoff (32) Metalloxide aufweist.

11. Anordnung (10, 110, 310) gemäß Anspruch 10, wobei die Metalloxide ausgewählt sind aus Oxiden von Zink, Zinn, Aluminium, Indium, Eisen, Wolfram, Titan, Silicium, Siliciumnitrid, Bor, Bornitrid, Kupfer, Silber, Yttrium, Seltenerdionen und Kombinationen davon.

## Revendications

1. Ensemble (10, 110, 310) pour le montage d'un élément optique (24, 124, 224, 324) dans un système optique, comprenant :
une monture (12, 112, 312) configurée pour une fixation rigide au système optique ;
une pluralité d'éléments métalliques souples (16, 116, 216, 316), chaque élément métallique souple (16, 116, 216, 316) ayant une première extrémité (28) fixée à ou s'étendant d'une seule pièce depuis la monture (12, 112, 312), et une extrémité libre (28) définissant une surface d'appui (30) destinée à supporter un élément optique (24, 124, 224, 324) ; et
un élément optique (24, 124, 224, 324) relié aux surfaces d'appui (30) de la pluralité d'éléments souples (16, 116, 216, 316) avec un adhésif (32),
**caractérisé en ce que** l'adhésif (32) est un adhésif inorganique, dans lequel l'adhérence entre l'élément optique (24, 124, 224, 324) et les éléments métalliques souples (16, 116, 216, 316) est améliorée par application d'un revêtement favorisant l'adhérence (40) sur une surface d'assemblage de l'élément optique (24, 124, 224, 324) ou dans lequel l'adhérence entre l'élément optique (24, 124, 224, 324) et l'élément métallique souple (16, 116, 216, 316) est améliorée par application d'un revêtement favorisant l'adhérence (40) sur la surface d'appui (30) de l'élément métallique souple (16, 116, 216, 316).

2. Ensemble (10, 110, 310) de la revendication 1, dans lequel la monture (12, 112, 312) a une forme annulaire.

3. Ensemble (10, 110, 310) de la revendication 1 ou 2, dans lequel les éléments métalliques souples (16, 116, 216, 316) sont formés d'une seule pièce avec la monture (12, 112, 312) à partir d'un corps métallique monolithique.

4. Ensemble (10, 110, 310) de l'une quelconque des revendications 1 à 3, dans lequel la monture (12, 112, 312) comporte des éléments de fixation destinés à fixer la monture (12, 112, 312) à un système optique.

5. Ensemble (10, 110, 310) de l'une quelconque des revendications 1 à 4, dans lequel la monture (12, 112, 312) comporte des trous destinés à fixer la monture (12, 112, 312) à un système optique.

6. Ensemble (10, 110, 310) de l'une quelconque des revendications 1 à 5, dans lequel les éléments métalliques souples (16, 116, 216, 316) sont des parties intégrantes d'un dispositif de retenue ayant une paroi de forme annulaire jouxtant et fixée à une paroi circonférentielle interne de la monture (12, 112, 312).

7. Ensemble (10, 110, 310) de l'une quelconque des revendications 1 à 6, dans lequel les éléments métalliques souples (16, 116, 216, 316) ont un profil en forme de U inversé.

8. Ensemble (10, 110, 310) de l'une quelconque des revendications 1 à 7, dans lequel l'adhérence entre l'élément optique (24, 124, 224, 324) et l'élément métallique souple (16, 116, 216, 316) est améliorée par application d'un revêtement favorisant l'adhérence (40) à la fois sur les surfaces d'assemblage de l'élément optique (24, 124, 224, 324) et les surfaces d'appui (30) des éléments métalliques souples (16, 116, 216, 316).

9. Ensemble (10, 110, 310) de l'une quelconque des revendications 1 à 8, dans lequel le revêtement favorisant l'adhérence (40) est composé de titanates, zirconates ou silanes.

10. Ensemble (10, 110, 310) de l'une quelconque des revendications 1 à 9, dans lequel l'adhésif inorganique (32) comprend des oxydes métalliques.

11. Ensemble (10, 110, 310) de la revendication 10, dans lequel les oxydes métalliques sont choisis parmi les oxydes de zinc, étain, aluminium, indium, fer, tungstène, titane, silicium, nitrure de silicium, bore, nitrure de bore, cuivre, argent, yttrium, ions de terres rares, et les combinaisons de ceux-ci.
